# EUROPÄISCHE PATENTSCHRIFT

(11) **EP 1 940 744 B1**
(45) Veröffentlichungstag und Bekanntmachung des Hinweises auf die Patenterteilung: **15.04.2015**
(21) Anmeldenummer: 06805435.2
(22) Anmeldetag: 16.10.2006
(51) Int. Cl.: C02F 1/68, C02F 9/08, C02F 1/32, C02F 1/44, C02F 1/20, C02F 103/04

(54) **APPARATUR ZUR HERSTELLUNG VON PHYSIOLOGISCHEN, THERAPEUTISCHEN UND CHEMOTHERAPEUTISCHEN WÄSSRIGEN SPÜLLÖSUNGEN**
APPARATUS FOR THE GENERATION OF PHYSIOLOGICAL THERAPEUTIC AND CHEMOTHERAPEUTIC AQUEOUS RINSING SOLUTIONS
APPAREILLAGE SERVANT A PRODUIRE DES SOLUTIONS DE RINÇAGE AQUEUSES PHYSIOLOGIQUES, THERAPEUTIQUES ET CHIMIOTHERAPEUTIQUES

(30) Priorität: 19.10.2005 DE 102005049951
(43) Veröffentlichungstag der Anmeldung: 09.07.2008
(73) Patentinhaber: Becker, Franz Ferdinand, 63110 Rodgau (DE); Herbst, Reinhold H., 91728 Possendorf (DE)
(72) Erfinder: Becker, Franz Ferdinand, 63110 Rodgau (DE); Herbst, Reinhold H., 91728 Possendorf (DE)
(74) Vertreter: Flosdorff, Jürgen
(86) Internationale Anmeldenummer: PCT/DE2006/001827
(87) Internationale Veröffentlichungsnummer: WO 2007/045221

(56) Entgegenhaltungen:
- EP-A- 1 498 392
- EP-A2- 0 436 098
- EP-A2- 0 752 391
- DE-A1- 10 256 584
- GB-A- 2 038 795
- US-A1- 2003 198 689

## Beschreibung

Die Erfindung betrifft eine Apparatur, die eine Flüssigkeit in physiologischer oder therapeutischer Zusammensetzung erzeugt, die zum Spülen von Hohlräumen in menschlichen Organen und zum Freispülen von Operationsfeldern zum Einsatz kommt. Bei der Spüllösung handelt es sich um ein Medical - Produkt.

Die US 2003/0198689 A1 offenbart ein Desinfektionsmittel und ein Verfahren zu dessen Herstellung. Dabei werden Zitronensäure und Silberionen Reinstwasser zugesetzt, das von einer Umkehrosmoseeinheit zugeführt wird, und das so gebildete nicht-toxische, umweltfreundliche Desinfektionsmittel fließt durch ein Ventil in eine Leitung, um als Desinfektionsmittel in einem Wassersystem oder zu einer anderen geeigneten Anwendung weitergeführt zu werden.

Die EP 1 498 392 A1 offenbart eine Vorrichtung und ein Verfahren zur Behandlung von Trinkwasser beispielsweise für therapeutische Zwecke. Dabei fließt Wasser aus einer Trinkwasserleitung nacheinander durch verschiedene Behälter, die den Wasserstrom jeweils speziell behandeln. Das Wasser wird schließlich aus einem Wasserhahn entnommen.

Die GB 20 38 795 A offenbart eine Vorrichtung zur Herstellung von sterilem Wasser, das ein Ultrafiltrationsmodul und eine UV-Sterilisierungseinrichtung durchströmt, die zwischen einem Anschluss für unbehandeltes Wasser und einem Abgabebehälter für das erzeugte sterile Wasser angeordnet sind. Bevor das Wasser das Ultrafiltrationsmodul durchströmt, wird Desinfektionsmittel in die Wasserleitung mittels einer Pumpe eingeführt.

Die EP 0 436 098 A2 offenbart eine Umkehrosmoseanlage mit einer Entgasungseinrichtung

Der vorliegenden Erfindung liegt die Aufgabe zugrunde, eine solche Apparatur anzugeben, die eine physiologische, therapeutische oder chemotherapeutische wäßrige Spüllösung im Online-Verfahren erzeugt.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die erfindungsgemäße Apparatur enthält einen Wasserteil zur Herstellung einer geeigneten Trägerflüssigkeit, bei der es sich um Reinstwasser handelt, ein Mischsystem zum Mischen des Reinstwassers mit einem Spül-Konzentrat, so daß die gewünschte Spüllösung entsteht, und ein Anwendungsteil zur Abgabe der Spüllösung.

In weiterer Ausgestaltung der Erfindung enthält das Wasserteil einen Wasserzulauf, durch den Wasser, bevorzugt Trinkwasser, entweder unter Druck in den Wasserteil eingeführt, oder aber durch eine Pumpe in den Wasserteil eingesaugt wird. Damit kann die Zuführung des Wassers entweder aus einer Wasserleitung oder aber aus Kanistern oder ähnlichen Behältern erfolgen.

Weiter ist erfindungsgemäß vorgesehen, daß das Wasserteil einen Wärmetauscher, einen Vorlaufbehälter, die Membran und eine Heizeinrichtung aufweist.

Erfindungsgemäß enthält das Mischsystem eine Entgasungseinrichtung für das Reinstwasser und einen Mischbehälter, in dem das zugeführte Reinstwasser mit dem ebenfalls zugeführten Spül-Konzentrat durch eine geeignete Einrichtung gemischt wird, und darauf folgend eine Pumpe.

Weiter ist erfindungsgemäß vorgesehen, daß das Anwendungsteil einen Sterilfilter und ein Überleitungsgerät aufweist, das vorzugsweise mit einem Schlauch mit einem Anschlußadapter an beiden Seiten besteht. An das Überleitungsgerät kann wahlweise ein Beutel, ein Katheter oder eine Spüllanze angeschlossen werden.

In der Apparatur wird demnach eine geeignete Trägerflüssigkeit hergestellt, in der Regel Reinstwasser, das in einem Mischsystem im Online - Verfahren mit Spül - Konzentrat gemischt wird, so dass eine physiologische, therapeutische oder chemotherapeutische Spüllösung entsteht. Die Spüllösung kann über das Anwendungsteil in einen Beutel abgefüllt oder mit einem Katheder oder einer Spüllanze verbunden werden.

Die Apparatur kann sowohl im operativen, stationären wie auch im ambulanten Bereich zum Einsatz kommen. Ein weiterer Einsatzbereich für die Apparatur ist der Horne Care Bereich. Hier kann die Apparatur, nach Einweisung, vom Patienten in seinem häuslichen Bereich selbstständig angewendet werden.

Die Apparatur stellt eine für den medizinischen Einsatz in allen Belangen gleichwertige physiologische, therapeutsche oder chemotherapeutische Spüllösung, gegenüber den heute üblichen Spüllösungen in Beuteln oder Flaschen, her.

Für die Herstellung der Spüllösung wird z.B. aus Trinkwasser in einem speziellen Aufbereitungsverfahren Reinstwasser hergestellt, das als Trägerflüssigkeit für das Spül - Konzentrat dient. In Abhängigkeit vom Verbrauch an Spüllösung wird das Reinstwasser über eine Entgasung einem Mischsystem zugeführt. Die Zufuhr erfolgt Volumen überwacht. Das gleiche gilt für das Spül - Konzentrat, das ebenfalls volumenkontrolliert dem Mischsystem zugeführt wird. Über eine Pumpe kann die Spüllösung drucklos oder mit vorgewähltem Druck über einen Sterilfilter einer Anwendung zugeführt werden. Die Leitung für die Spüllösung kann mit Hilfe eines Überleitungsgerätes (Schlauch mit entsprechenden Anschlüssen) an einen Katheder angeschlossen werden. Eine weitere Möglichkeit der Anwendung besteht darin, dass das Überleitungsgerät an eine Spüllanze angeschlossen wird, mit deren Hilfe z.B. Operationsfelder freigespült werden können.

Nach der Anwendung kann die Apparatur thermisch desinfiziert werden. Hierzu befindet sich in der Apparatur eine Heizung, die für die thermische Desinfektion die Flüssigkeit auf die notwendige Temperatur bringt. Hierdurch wird ein hohes Maß an hygienischer Sicherheit gewährleistet.

Durch seinen Aufbau ist die Apparatur geeignet, bei der Zufuhr von Trinkwasser über den Wasserzulauf dieses Wasser auch aus einem Kanister anzusaugen, da die Apparatur auch über eine Saugpumpe verfügt. Dies stellt eine weitere Besonderheit der Apparatur dar.

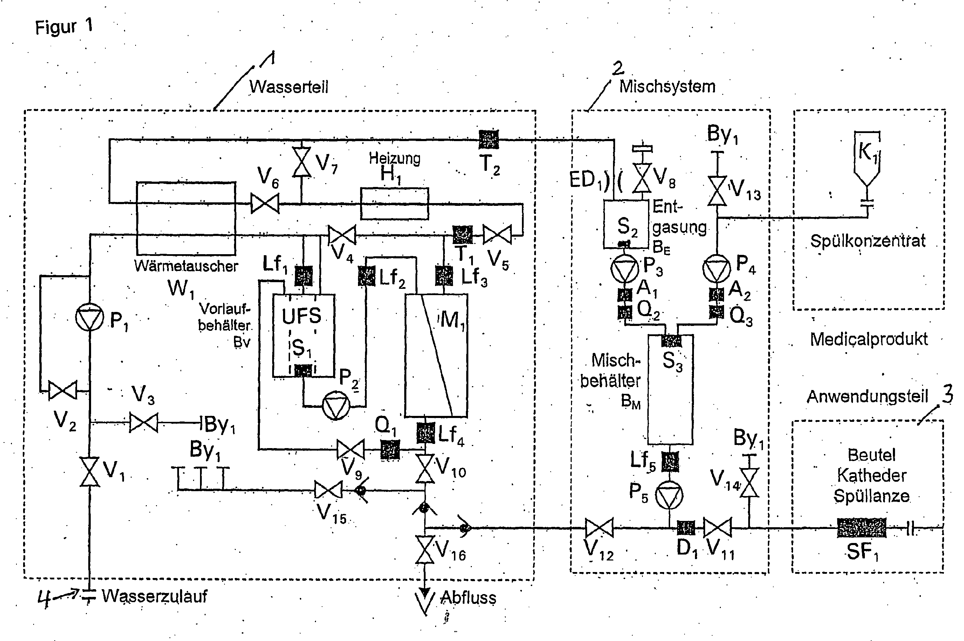

Die Apparatur besteht aus Bauelementen, deren Funktionen im folgenden mit Bezug auf die beigefügte Zeichnung beschrieben werden. Die Figur zeigt ein Flußschema, in der die einzelnen Bauelemente angegeben sind.

Die Apparatur besteht aus einem Wasserteil 1 und einem Mischsystem 2 die in einem gemeinsamen Gehäuse untergebracht sind. Eine weitere Funktionseinheit stellt das Anwendungsteil 3 dar, das je nach Einsatzbereich gestaltet ist. Es wird hierbei unterschieden zwischen einem Abfüllsystem, mit dem die Spüllösung über ein Überleitungsgerät (Schlauch mit geeigneten Anschlüssen) in einen Beutel oder eine Flasche abgefüllt wird, oder an das Überleitungsgerät wird ein Katheder angeschlossen zum Spülen und Füllen von Hohlräumen. Ein weiteres Anwendungsteil stellt eine Spüllanze dar, die am Überleitungsgerät angeschlossen werden kann. Mit der Spüllanze kann der Anwender z. B. ein Operationsfeld von unerwünschten Verunreinigungen freispülen.

Der Wasserzulauf zur Apparatur wird durch einen geeigneten Anschluss, je nach Anforderung, vorgenommen. Mit dem Ventil V₁ kann der Vordruck begrenzt werden. Das Ventil V₂ ist geöffnet, wenn an der Apparatur am Wassereingang ein Druck vorzugsweise von mehr als 1 bar anliegt. Ist dies nicht der Fall, so ist Ventil V₂ geschlossen und das Wasser wird über die Pumpe P₁ angesaugt. Durch diese Anordnung kann auch Wasser aus einem Kanister angesaugt werden. In allen Fällen fließt das Wasser über ein Leitungssystem durch einen Wärmetauscher in einen Vorlaufbehälter Bᵥ. Vor dem Vorlaufbehälter ist eine Leitfähigkeitssonde Lf₁ in das Leitungssystem integriert, diese misst die Eingangsleitfähigkeit des Wassers. Im Vorlaufbehälter befindet sich ein Sensor S₁ der die Füllhöhe im Vorlaufbehälter überwacht. Weiterhin ist im Vorlaufbehälter eine UVS - System integriert, das Bakterien und Keime deaktiviert und oxydieren lässt. Die Größe des Vörlaufbehälters hängt vom Anwendungsbereich der Apparatur ab.

Mit Hilfe der Pumpe P₂ wird das Wasser aus dem Vorlaufbehälter über die Leitfähigkeitssonde Lf₂ auf eine Membran M₁ gedrückt. Diese kann ein - oder mehrstufig ausgeführt sein. Das entstehende Reinstwasser fließt bei geöffnetem Ventil V₅, nach Messung seiner Leitfähigkeit mit dem Sensor Lf₃ und einer Temperaturmessung mit dem Sensor T₁ zur Heizung H₁. Hier wird das Reinstwasser auf eine vorgegebene Temperatur gebracht. Der Sensor T₂ überwacht die Temperatur nach dem Wärmetauscher und lässt das Reinstwasser entweder über das Ventil V₆ durch den Wärmetauscher fließen oder über Ventil V₇ direkt zum Mischsystem. Überschüssiges Reinstwasser fließt über Ventil V₄ in den Vorlaufbehälter zurück. Dies gilt auch für das anfallende Konzentrat, das an der Membran M₁ entsteht. Das Konzentrat wird über das Ventil V₉ in den Vorlaufbehälter zurückgeführt, wobei die Leitfähigkeit mit dem Sensor Lf₄ und der Fluss mit dem Sensor Q₁ erfasst wird. Der Rückfluss von Reinstwasser und Konzentrat ist so abgestimmt, dass die Leitfähigkeit des Wassers im Vorlaufbehälter nicht höher als die Leitfähigkeit des Wasserzulaufs wird. Dies könnte eintreten, wenn zuviel Konzentrat zurückgeführt wird. Um dies zu verhindern hat die Apparatur ein Ventil V₁₀, über das überflüssiges Konzentrat zum Abfluss geleitet wird. Dieser Abfluss kann zu einem Kanister führen oder an ein herkömmliche Abflusssystem angeschlossen werden. Um Rückverkeimung zu vermeiden muss der Abfluss über einen freien Auslauf verfügen.

Im Mischsystem wird das Reinstwasser mit dem Spül - Konzentrat, das aus einer definierten Zusammensetzung von organischen, anorganischen oder chemischen Substanzen oder deren Kombination besteht, in einem Mischbehälter zusammengeführt. Hierzu fließt das Reinstwasser durch eine verstellbare Entgasungsdüse ED, in einen Entgasungsbehälter B_{E}. Nach der Düse entspannt sich das Reinstwasser und der gelöste Sauerstoff entweicht. Der Sensor S₂ im Entgasungsbehälter B_{E} überwacht den Füllstand. Über die Pumpe P₃ wird das Reinstwasser in den Mischbehälter gefördert, wobei der Sensor Q₂ die Menge an Reinstwasser erfasst die in den Mischbehälter gefördert wird. Der Sensor A₁ erkennt hierbei Luft im geförderten Reinstwasser. Das Spül - Konzentrat wird aus einem Vorratsbehälter K₁ über die Pumpe P₄ ebenfalls zum Mischbehälter gefördert. Auch hier wird der Fluss des Spül - Konzentrates durch einen Sensor Q₃ erfasst. Luft im Spül - Konzentrat wird durch den Sensor A₂ erkannt. Im Mischbehälter B_{M} wird die anwendungsfertige Spüllösung hergestellt und in ihrer Zusammensetzung durch die Leitfähigkeitsonde Lf₅ überwacht. Der Füllstand im Mischbehälter wird über den S₃ überwacht. Ist die vorgegebene Leitfähigkeit erreicht, kann über die Pumpe P₅ und das Ventil V₁₁ die Spüllösung zum Anwendungsteil gefördert werden. Hierbei besteht das Anwendungsteil aus einem Sterilfilter mit Überleitungsgerät (Schlauch mit Anschlussadapter an jeder Seite), an den ein Beutel angeschlossen werden kann, um die Spüllösung aufzunehmen. An das Überleitungsgerät kann auch über eine entsprechende Verlängerung eine Verbindung zu einem Katheder hergestellt werden, über den die Spüllösung zum Anwendungsort gelangt. Mit Hilfe der Pumpe P₅. kann auch mit definiertem Druck die Spüllösung gefördert werden, wobei der Druck über den Sensor D₁ überwacht wird. Weiterhin kann an das Überleitungsgerät auch eine Spüllanze angeschlossen werden. Mit diesem Anwendungsteil können Operationsfelder für eine bessere Sicht freigespült werden. Hierbei kann der Anwender die Spülmenge und den Spüldruck variieren. Das Überleitungsgerät, die Verlängerung, der Sterilfilter und die Spüllanze sind Zubehör zur Apparatur. Die Spüllösung kann über das Ventil V₁₂ zum Abfluss geleitet werden.

Nach jeder Anwendung muss die Apparatur desinfiziert werden. Dies erfolgt bevorzugt thermisch, wofür in der Heizung H₁ eine Temperatur von 95°C erzeugt wird und das Reinstwasser auf diese Temperatur aufgeheizt wird. Nachdem das Wasserteil und das Mischsystem mit Reinstwasser gefüllt sind, wird über das Ventil V₃ ein Zirkulationskreislauf über den Bypassverteiler By₁ aufgebaut. Das Ventil V₁ ist bei der Zirkulation geschlossen. An den Bypassverteiler sind die Ventile V₃, V₁₃ und V₁₄ angeschlossen. Nach Beendigung der Desinfektion wird das Ventil V₁₆ geöffnet und die Desinfektionslösung kann in den Abfluss geleitet werden. Nachdem das Ventil V₁ wieder geöffnet ist kann die Apparatur mit Wasser nachgespült werden. Die Apparatur steht nun für eine weitere Anwendung zu Verfügung.

## Patentansprüche

1. Apparatur zur Herstellung und Abgabe von physiologischen, therapeutischen oder chemotherapeutischen wässrigen Spüllösungen,
enthaltend
ein Wasserteil (1) zur Herstellung von Reinstwasser, wobei das Wasserteil (1) einen Wärmetauscher (W₁), einen Vorlaufbehälter (Bᵥ), eine Membran (M₁) und eine Heizeinrichtung (H₁) aufweist, ein Mischsystem (2) zum Mischen des Reinstwassers mit einem Spül-Konzentrat, so dass eine Spüllösung entsteht, wobei das Mischsystem (2) eine Entgasungseinrichtung (B_{E}) für das Reinstwasser, einen Mischbehälter (B_{M}), und darauf folgend eine Pumpe (P5) aufweist, und ein Anwendungsteil (3) zur Abgabe der Spüllösung, wobei das Anwendungsteil (3) einen Sterilfilter (SF₁) und ein Überleitungsgerät aufweist, an das wahlweise ein Beutel, ein Katheder oder eine Spüllanze anschließbar ist,
wobei die Pumpe (P₅) einstellbar ist, so dass der Spüldruck variierbar ist.

2. Apparatur nach Anspruch 1,
**dadurch gekennzeichnet,**
**dass** das Wasserteil (1) einen Wasserzulauf (4) hat, durch den Wasser entweder unter Druck durch ein geöffnetes Ventil (V₂) in die Apparatur zugeführt oder bei geschlossenem Ventil (V₂) durch eine Pumpe (P₁) in die Apparatur angesaugt wird.

3. Apparatur nach den Ansprüchen 1 und 2,
**dadurch gekennzeichnet,**
**dass** das Anwendungsteil (3) ein Überleitungsgerät aufweist, das aus einem Schlauch mit Anschlussadapter an beiden Seiten besteht.

## Claims

1. Apparatus for producing and dispensing physiological, therapeutic or chemotherapeutic aqueous flushing solutions, including a water section (1) for producing ultrapure water, wherein the water section (1) includes a heat exchanger (W₁), a feed container (Bᵥ), a membrane (M₁) and a heating device (H₁), a mixing system (2) for mixing the ultrapure water with a flushing concentrate so that a flushing solution is produced, wherein the mixing system (2) includes a degasification device (B_{E}) for the ultrapure water, a mixing container (B_{M}) and subsequently a pump (P₅), and an application section (3) for dispensing the flushing solution, wherein the application section (3) includes a sterile filter (SF₁) and a connection device, to which a bag, a catheter or a flushing lance is selectively connectable, wherein the pump (P₅) is adjustable so that the flushing pressure is variable.

2. Apparatus as claimed in Claim 1, **characterised in that** the water section (1) has a water inlet (4), through which water is either supplied under pressure through an open valve (V₂) into the apparatus or, when the valve (V₂) is closed, is drawn into the apparatus by a pump (P₁).

3. Apparatus as claimed in Claims 1 and 2, **characterised in that** the application section (3) includes a connection device, which consists of a hose with connection adapters on both sides.

## Revendications

1. Appareil pour la production et la fourniture de solutions de rinçage aqueuses physiologiques, thérapeutiques ou chimiothérapeutiques,
contenant
une partie aqueuse (1) pour la production d'eau ultrapure, dans lequel la partie aqueuse (1) présente un échangeur de chaleur (W₁), un réservoir d'alimentation (Bᵥ), une membrane (M₁) et un dispositif chauffant (H₁), un système de mélange (2) pour le mélange de l'eau ultrapure avec un concentré de rinçage de manière à ce qu'une solution de rinçage soit obtenue, dans lequel le système de mélange (2) présente un dispositif de dégazage (B_{E}) pour l'eau ultrapure, un conteneur de mélange (B_{M}) et consécutivement, une pompe (P5) et une partie d'utilisation (3) pour la fourniture de la solution de rinçage, dans lequel la partie d'utilisation (3) présente un filtre stérile (SF₁) et un appareil de transfert, pouvant être relié si on le souhaite à une poche, un cathéter ou une lance de soufflage,
dans lequel la pompe (P₅) peut être réglée de manière à ce que la pression de rinçage puisse varier.

2. Appareil selon la revendication 1,
**caractérisé en ce que**
la partie aqueuse (1) possède une arrivée d'eau (4) par laquelle de l'eau est acheminée sous pression par une soupape ouverte (V₂) dans l'appareil, ou est aspirée dans l'appareil par une pompe (P₁), alors que la soupape (V₂) est fermée.

3. Appareil selon les revendications 1 et 2,
**caractérisé en ce que**
la partie d'utilisation (3) présente un appareil de transmission qui est constitué d'un tuyau doté d'adaptateurs de raccordement des deux côtés.
